Europäisches Patentamt

European Patent Office ·

Office européen des brevets

(19)

(11) Veröffentlichungsnummer: **0 302 220**
**A2**

(12) **EUROPÄISCHE PATENTANMELDUNG**

(21) Anmeldenummer: 88110353.5

(22) Anmeldetag: 29.06.88

(51) Int. Cl.⁴: **B60C 25/02**

(30) Priorität: 07.08.87 DE 3726409

(43) Veröffentlichungstag der Anmeldung:
08.02.89 Patentblatt 89/06

(84) Benannte Vertragsstaaten:
**ES FR GB IT NL SE**

(71) Anmelder: **HOFMANN WERKSTATT-TECHNIK GMBH**
**Werner-von-Siemens-Strasse 2**
**D-6102 Pfungstadt(DE)**

(72) Erfinder: **Goebel, Eickhart, Dipl.-Ing./FH**
**Elbestrasse 11**
**D-6102 Pfungstadt(DE)**

(74) Vertreter: **Nöth, Heinz, Dipl.-Phys. et al**
**Patentanwälte Pfenning, Meinig & Partner**
**Mozartstrasse 17**
**D-8000 München 2(DE)**

(54) **Demontiervorrichtung für einen an einer Radfelge befestigten Reifen.**

(57) Eine Demontiervorrichtung für einen an einer Radfelge befestigten Reifen mit
- einem Demontierhebel, der um eine erste Schwenkachse am Rad schwenkbar abgestützt ist,
- einem am Demontierhebel um eine zweite Achse schwenkbar gelagerten Demontierwerkzeug, das einen am Reifenwulst angreifenden Eingriffteil aufweist,
- wobei beim Schwenken des Demontierhebels in der für den Demontiervorgang vorgesehenen Richtung (Demontierschwenkrichtung) das am Reifenwulst angreifende Demontierwerkzeug in einer hierzu entgegengesetzten Richtung am Demontierhebel verschwenkt und dabei ein zu lösender Reifenwulstteil, an welchem das Demontierwerkzeug angreift, zunächst radial nach innen aus dem Bereich des Felgenhorns und dann in axialer Richtung vom Rad weg bewegt ist und
- einem Anschlag, durch den die zur Demontierschwenkrichtung des Demontierhebels entgegengesetzt gerichtete Schwenkbewegung des Demontierwerkzeugs am Demontierhebel begrenzt ist.

Fig. 1

## Demontiervorrichtung für einen an einer Radfelge befestigten Reifen

Die Erfindung betrifft eine Demontiervorrichtung nach dem Oberbegriff des Anspruchs 1.

Eine derartige Demontiervorrichtung für Fahrzeugluftreifen, welche sich mit ihren Reifenwülsten auf Radfelgen mit radial nach innen gerichteten umlaufenden Felgenhörnern (Zeitschrift "Gummibereifung", Januar 1984, Seiten 62 bis 65) befinden, und bei denen die Reifenseitenwände von außen um die Felgenhörner herumgreifen, ist aus der DE-OS 35 24 664 bekannt. Bei der bekannten Demontiervorrichtung wird beim Schwenken des Demontierhebels in der für den Demontiervorgang vorgesehenen Richtung (Demontierschwenkrichtung) das am Reifenwulst angreifende Demontierwerkzeug in einer hierzu entgegengesetzten Richtung am Demontierhebel verschwenkt, wobei ein zu lösender Reifenwulstteil, an welchem das Demontierwerkzeug mit einem Eingriffteil angreift, zunächst radial nach innen aus dem Bereich des Felgenhorns und dann in axialer Richtung vom Rad weg bewegt wird. Das Demontierwerkzeug geht der bekannten Demontiervorrichtung von der radial nach innen gerichteten Bewegung in die axial vom Rad weg gerichtete Bewegung über, wenn die am zu lösenden Reifenwulstteil vom Demontierwerkzeug ausgeübte Kraft etwa gleich der dabei von einer Feder vermittelten Vorspannkraft zwischen dem Demontierhebel und dem Demontierwerkzeug ist.

Aufgabe der Erfindung ist es demgegenüber, eine Demontiervorrichtung der eingangs genannten Art zu schaffen, bei der der Übergang von der radial nach innen gerichteten Bewegung des an einem Reifenwulstteil angreifenden Demontierwerkzeugs in die axial vom Rad weg gerichtete Bewegungsphase unabhängig von einer Federvorspannkraft erreicht wird.

Diese Aufgabe wird erfindungsgemäß durch die kennzeichnenden Merkmale des Anspruchs 1 gelöst.

Hierdurch läßt sich gewährleisten, daß mit Sicherheit, insbesondere bei der radial nach innen gerichteten Bewegung, ein vollständiges Lösen des Reifenwulstteils, an welchem das Demontierwerkzeug angreift, aus dem Felgenhornbereich erreicht wird. Bei der sich dann anschließenden axialen, vom Rad weg gerichteten Bewegung wird der zu lösende Reifenwulstteil mit Sicherheit an der radial am weitest innen liegenden Kante des Felgenhorns vorbeigeführt und gelangt aus dem Bereich des Felgenhorns.

Um ein Abrutschen des Eingriffteils des Demontierwerkzeugs vom zu lösenden Reifenwulstteil zu verhindern, wird gewährleistet, daß bei der radial nach innen gerichteten Bewegung über den Eingriffteil auf den zu lösenden Reifenwulstteil eine axial von der Felge weg gerichtete Kraftkomponente einwirkt. Diese ergibt sich daraus, daß am Eingriffteil eine zur zweiten Schwenkachse gerichtete Kraft (Kraftvektor) neben der radialen Komponente auch eine axiale Komponente aufweist.

Es ist dann eine zwischen den Demontierhebel und das Demontierwerkzeug geschaltete Federkraft überflüssig. Jedoch kann durch eine derartige Federkraft, beispielsweise in Form der aus der DE-OS 35 24 664 bekannten Feder oder eine entsprechend gestaltete Druckfeder, welche die zweite Schwenkachse in Demontierschwenkrichtung vorspannt, zusätzlich ein Andrücken des Eingriffteils an den zu lösenden Reifenwulstteil und damit ein sicheres Halten des Eingriffteils am Reifenwulstteil gewährleistet werden. Durch diese Feder kann auch erreicht werden, daß sie in der ersten Schwenkphase des Demontierhebels in Demontierschwenkrichtung einen vorwiegend axialen Kraftvektor erzeugt, durch den der Eingriffteil zwischen zu lösendem Reifenwulstteil und radial innen liegender Felgenfläche gedrückt wird.

Um eine einwandfreie Angriffsfläche des Eingriffteils des Demontierwerkzeugs am zu lösenden Reifenwulstteil zu erzielen, kann am Reifenwulst und/oder an der radial innen liegenden Felgenfläche eine entsprechende Ausnehmung vorhanden sein. Gegebenenfalls ist es dann nicht mehr erforderlich, daß zwischen dem Demontierwerkzeug und dem Demontierhebel eine Federkraft wirksam wird, wenn gewährleistet ist, daß während des Demontiervorgangs der Eingriffteil des Demontierwerkzeugs am zu lösenden Reifenwulstteil in Eingriff bleibt.

Die Federkraft zwischen dem Demontierwerkzeug und dem Demontierhebel ist so bemessen, daß sie beim Schwenken des Demontierhebels in Demontierschwenkrichtung ein allmähliches Verschwenken des Demontierwerkzeugs am Demontierhebel um die zweite Achse bewirkt, so dab bis zum Erreichen des Anschlags, mit welchem die Schwenkbewegung des Demontierwerkzeugs am Schwenkhebel begrenzt ist, gewährleistet bleibt, daß der Eingriffteil sich mit dem zu lösenden Reifenwulstteil radial nach innen bewegt. Sobald der Anschlag zur Wirkung kommt, wird die radial nach innen geführte Bewegung des Eingriffteils übergeleitet in die axial vom Rad weg gerichtete Bewegungsphase, während welcher der vom Felgenhorn zu lösende Reifenwulstteil endgültig aus dem Bereich des Felgenhorns geführt wird.

Falls zwischen den Demontierhebel und das Demontierwerkzeug eine Federkraft geschaltet ist, kann diese auch durch eine Druckfeder vermittelt werden, welche am Demontierwerkzeug abgestützt ist und einen Zugbolzen beaufschlagt, der am Demontierhebel angelenkt ist. Der Anschlag zur Begrennzung der Schwenkbewegung des Demontierwerkzeugs kann durch eine lose, über diese Druckfeder geschobene Hülse vermittelt werden.

Es kann noch ein weiterer Anschlag, insbesondere am Demontierhebel, vorgesehen sein, gegen welche in Ruhestellung das Demontierwerkzeug anliegt.

Die Anordnung der ersten und zweiten Schwenkachse sowie des Eingriffteils zueinander ist so durch entsprechende Ausbildung des Demontierhebels und des Demontierwerkzeugs vorgesehen, daß nach der axialen, von der Felge weg gerichteten Bewegungsphase bei einer weiteren Schwenkbewegung des Demontierwerkzeugs in der Demontierschwenkrichtung um die zweite Schwenkachse der Eingriffteil bezüglich der Felgenachse eine radial nach außen gerichtete Bewegungskomponente aufweist. Diese Schwenkbewegung des Demontierwerkzeugs kann auch durch die zwischen den Demontierhebel und das Demontierwerkzeug geschaltete Federkraft vermittelt werden. Falls eine derartige Federkraft fehlt, kann die soeben angespro chene, radial nach außen gerichtete Bewegungskomponente auch durch eine weitere Schwenkbewegung des Demontierhebels um die erste Schwenkachse bei Mitführung des Demontierwerkzeugs erreicht werden.

Der Demontierhebel kann auch mittels Rollen am Rad, insbesondere beim Demontiervorgang, abgestützt sein. Hierdurch läßt sich die erwähnte radial nach außen gerichtete Bewegung des Eingriffteils mit dem abgehobenen Reifenwulstteil noch unterstützen.

Um zu erreichen, daß während des Demontiervorgangs, insbesondere während der nach innen gerichteten radialen Bewegung des Eingriffteils, der Demontierhebel seine am Rad abgestützte Lage beibehält, kann am Demontierhebel zum Auffangen einer radial nach innen gerichteten Kraftkomponente eine am Rad abstützbare Stützeinrichtung vorgesehen sein. Bevorzugt ist diese Stützeinrichtung am Demontierhebel schwenkbar angelenkt. Insbesondere wenn die Schwenkachse der Stützeinrichtung mit der ersten Schwenkachse zusammenfällt, wird gewährleistet, daß die Schwenkachse während der radial nach innen gerichteten Bewegung des abzulösenden Reifenwulstteils ihre Lage beibehält und nicht in der Reifenbene sich verändert. Auf diese Weise läßt sich erzielen, daß der Auflagebereich des Demontierhebels auf der Felge oder auf dem Reifen felgen- bzw. reifenschonend ausgebildet sein kann. Wenn die schon erwähnten Rollen zur Abstützung des Demontierhebels verwendet werden, wird durch die Stützeinrichtung ein Verschieben während des Demontiervorgangs verhindert.

Die Abstützeinrichtung stützt sich bevorzugt mit zwei Abstützstellen am Rad, insbesondere am Reifen, ab. Die beiden Abstützstellen besitzen einen solchen Abstand von der Eingriffstelle des Demontierwerkzeugs am Reifenwulst, daß ein einwandfreies Lösen des abzulösenden Reifenwulstteils gewährleistet bleibt. Die Abstützstellen können zur Einstellung auf unterschiedliche Reifengrößen einstellbar sein. Hierzu können sie in radialer und tangentialer Richtung verstellbar ausgeführt sein.

Die Abstützstellen können an der Stützeinrichtung in Form von Stützfingern vorhanden sein.

Die Abstützeinrichtung kann ferner einen Stützbügel aufweisen, der sich etwa um die Hälfte des Innenumfangs des Reifens erstreckt, wobei die Abstützstellen in Form der Stützfinger verschiebbar an diesem Stützbügel angeordnet sein können.

Anhand der beiliegenden Figuren wird an einem Ausführungsbeispiel die Erfindung noch näher erläutert. Es zeigt:

Fig. 1 eine perspektivische Darstellung einer Demontiervorrichtung, die ein Ausführungsbeispiel der Erfindung ist;

Fig. 2 bis 5 in schnittbildlicher Darstellung verschiedene Demontagephasen der in der Fig. 1 dargestellten Demontiervorrichtung und

Fig. 6 in perspektivischer Darstellung ein weiteres Ausführungsbeispiel für die Demontiervorrichtung.

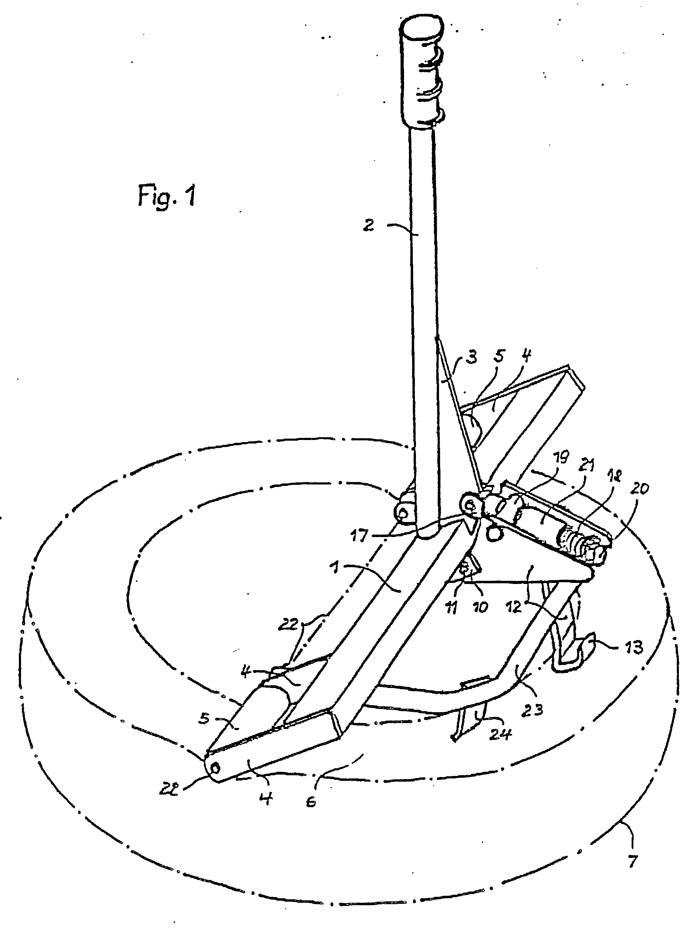

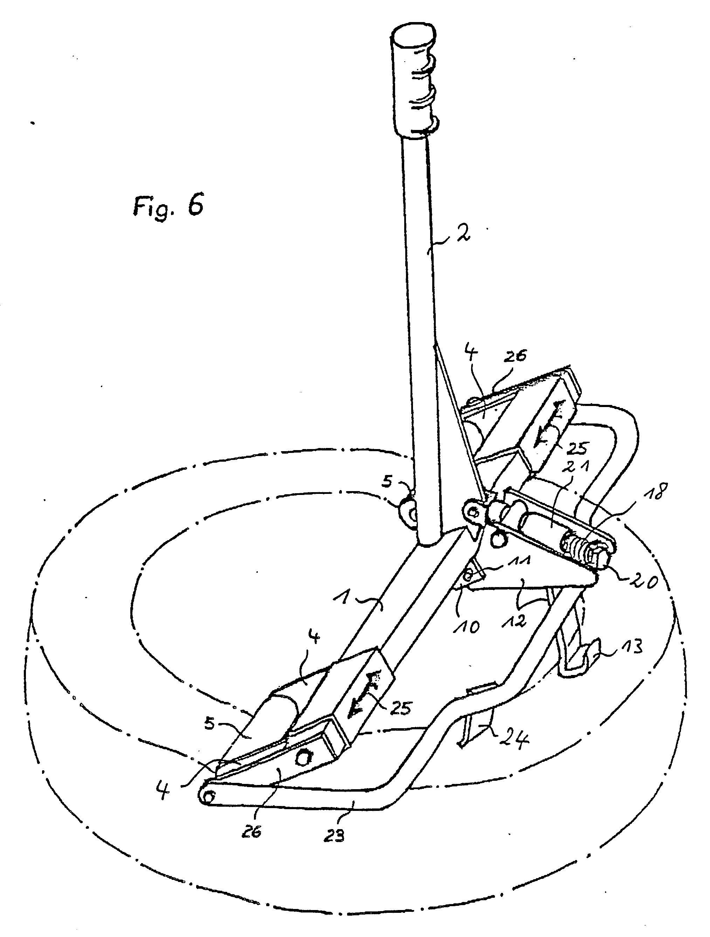

Die in den Figuren 1 und 6 dargestellten Ausführungsformen einer Demontiervorrichtung besitzen einen Querholm 1 mit einem mittig senkrecht angebrachten Betätigungshebel 2. Beide Teile werden durch ein Knotenblech 3 versteift. An den Enden des Querholms 1 sind über Ausleger 4 Drucklager, welche bei den Ausführungsbeispielen als Rollen 5 ausgebildet sind, angebracht. Diese Rollen liegen beim Demontagevorgang auf einer seitlichen Außenfläche 6 eines zu demontierenden Reifens 7 auf, wobei die Demontagekräfte über ein Felgenhorn 8 einer Felge 16 von den als Rollen 5 ausgebildeten Druck lagern abgestützt werden. Die Ausleger 4 dienen vor allem der Überbrückung einer Felgenschüssel 9 der Felge 16. Die Ausleger 4 sind hierzu so hoch ausgebildet, daß beim Demontagevorgang der Querholm 1 die Felgenschüssel 9 nicht berührt, selbst wenn diese axial eines der Felgenhörner 8 bzw. die seitliche Außenfläche 6 des Reifens 7 überragen sollte. In der Mitte des Querholms 1 sind gegenüber dem Betätigungshebel 2 weitere Ausleger 10 befestigt. Der Querholm 1 der Betätigungshebel 2, das Knotenblech 3, die Ausleger 4, die Drucklager 5 und die Ausleger 10 bilden den Demontierhebel.

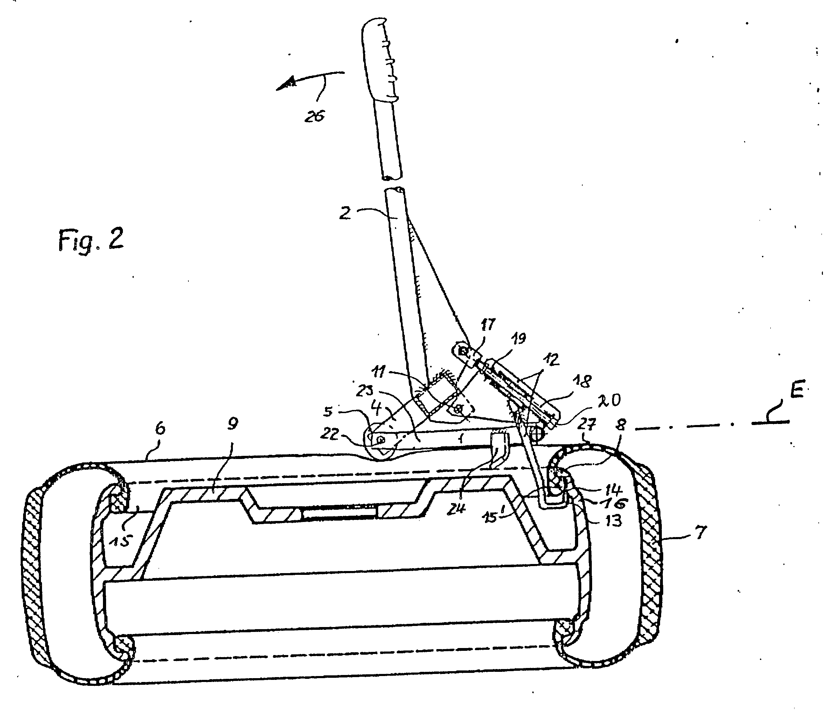

An den Auslegern 10 ist schwenkbar um eine Schwenkachse 11 ein Demontierwerkzeug 12 gelagert, dessen vorderes Ende einen an einem abzuhebenden Reifenwulstteil angreifenden Eingriffteil bildet und bei dargestellten Ausführungsbeispielen zu einer hakenförmigen Demontierklaue 13 geformt ist. Diese Demontierklaue 13 kann an einer Eingriffstelle 14 einen vom Felgenhorn 8 zu lösenden Reifenwulstteil 15' eines Reifenwulstes 15 erfassen. Diese Eingriffstelle 14 liegt zwischen dem äußeren Umfangsteil des Reifenwulstes 15 bzw. des Reifenwulstteiles 15' und dem inneren Umfangsteil des Wulstsitzes in der Felge 16 (Fig. 2).

An dem Knotenblech 3 ist ein Gabelstück 17 schwenkbar gelagert. Eine Druckfeder 18, welche zwischen dem Demontierwerkzeug 12 und dem Demontierhebel eine Federkraft vermittelt, drückt auf einen zur Schwenkachse 11 achsparallelen Gelenkbolzen 19 des Demontierwerkzeugs 12, wodurch das Demontierwerkzeug 12 an das Gabelstück 17, welches als Anschlag wirkt, gedrückt wird. Die Druckfeder 18 ist durch eine auf Zug beanspruchte Schraube 20 (Zugbolzen) vorgespannt. Diese Schraube 20 ist durch eine Querbohrung des Gelenkbolzens 19 geführt und im Gabelstück 17 befestigt. Die Druckfeder 18 stützt sich dabei auf der Seite des Demontierwerkzeugs 12 am Gelenkbolzen 19, der am Demontierwerkzeug 12 befestigt ist, an ihrem einen Ende ab. Das andere Ende der Druckfeder 18 stützt sich gegen einen Schraubenkopf der Schraube 20 ab und übt auf diese Weise auf die Schraube 20 den erforderlichen Zug aus, so daß in Ruhestellung, wie in den Figuren 1 und 6 gezeigt, das Demontierwerkzeug 12 und der Demontierhebel am Gelenkbolzen 19 und Gabelstück 17 aneinander liegen. Bei einer Schwenkbewegung des Demontierwerkzeugs 12 im Uhrzeigersinn um die Schwenkachse 11 wird die Druckfeder 18 über den Gelenkbolzen 19 weitergespannt. Eine derartige Schwenkbewegung ergibt sich, wie noch im einzelnen auszuführen ist, wenn bei den dargestellten Ausführungsbeispielen der Betätigungshebel 2 entgegen dem Uhrzeigersinn für den Demontiervorgang in Richtung eines Pfeiles 26 (Fig. 2), welcher eine Demontierschwenkrichtung darstellt, verschwenkt wird.

Die Schwenkbewegung des Demontierwerkzeuges 12 im Uhrzeigersinn um die Schwenkachse 11 und - falls die Druckfeder 18 vorgesehen ist - die Kraft der Druckfeder 18 werden begrenzt durch ein Anschlagrohr 21, welches als Begrenzung für die Schwenkbewegung des Demontierwerkzeugs 12 beim Demontagevorgang wirkt, wie im einzelnen noch erläutert wird. Beim dargestellten Ausführungsbeispiel umschließt das Anschlagrohr 21 die Druckfeder 18 lose und befindet sich zwischen dem Gelenkbolzen 18 und dem Kopf der Schraube 20. Wenn das Anschlagrohr 21 als Anschlag zur Wirkung kommt, ist das Anschlagrohr 21 zwischen dem Gelenkbolzen und dem Kopf der Schraube 20 eingeklemmt. Auf diese Weise ist der gesamte Bereich der Schwenkbewegung des Demontierwerkzeugs 12 um die Schwenkachse 11 festgelegt. Dieser Bereich der Schwenkbewegung ist bestimmt durch die Bewegungsmöglichkeit des Gelenkbolzens 19, der zum einen in Ruhestellung am Gabelstück 17 und zum andern über das Anschlagrohr 21 am Kopf der Schraube 20 anschlägt.

Die als Rollen 5 ausgebildeten Drucklager sind in den in den Figuren 1 und 6 gezeigten Ausführungsbeispielen an den unteren Enden der Ausleger 4 um eine Schwenkachse 22 drehbar ausgeführt. An dieser Schwenkachse 22 ist beim Ausführungs beispiel der Fig. 1 auch Stützbügel 23 gelagert. Der Stützbügel 23 wird von den Innenseiten der Ausleger 4 aus dem das Demontierwerkzeug 12 radial außen herumgeführt und folgt im wesentlichen dem inneren Umfangsradius des Reifens 7. In der Ruhelage des Stützbügels 23 liegt der mittlere Teil des Stützbügels 23 kraftfrei bei geringem Spiel in einem Winkel, welcher von der unteren horizontalen Kante des Demontierwerkzeugs 12 und der vorderen Fläche des schräg vertikalen Klauenteils der Demontierklaue 13 am Demontierwerkzeug 12 bestimmt wird. Die Position in diesem Winkel kann beim dargestellten Ausführungsbeispiel durch die Druckfeder 18 erzwungen werden, welche in der Ruhelage das Demontierwerkzeug 12 mit dessen Gelenkbolzen 19 an das Gabelstück 17, welches als Anschlag wirkt, drückt. Der Stützbügel 23 wird dabei durch die vordere, schräg nach unten gerichtete Fläche des Verbindungsstücks zwischen Demontierklaue 13 und in der Schwenkachse angelenktem Schwenkkörper des Demontierwerkzeugs 12 in angehobener Stellung gehalten, wie auch die Figur 2 zeigt. Natürlich kann die Ruhelage des Stützbügels 23 auch durch eine zusätzliche Feder noch unterstütz werden.

Am Stützbügel 23 sind zwei Stützfinger 24 angebracht, welche axial in das Rad unmittelbar am Felgenhorn 8 bzw. am Reifenwulst 15 eintauchen. Während des Demontagevorgangs liegen sie dort an und stützen radiale Demontagekräfte am Felgenhorn 8 ab. Die Stützfinger 24 sind vom Demontierwerkzeug 12 bzw. der Demontierklaue 13 so weit entfernt, daß sie die radiale und axiale Bewegung des Reifenwulstteils 15', welcher im Bereich der Eingriffstelle 14 (Fig. 2) abgehoben werden soll, nicht behindern. Bei den dargestellten Ausführungsbeispielen bilden der Stützbügel 23 und die Stützfinger 24 eine Stützeinrichtung zum Auffangen radial nach innen gerichteter Kraftkomponenten, die während des Demontagevorgangs auftreten.

Bei dem in der Fig. 6 dargestellten Ausführungsbeispiel können die von den Rollen 5 gebildeten Drucklager auch stark unterschiedlichen Raddurchmessern angepaßt werden, so daß sie immer im Bereich des umlaufenden Felgenhorns 8 bzw.

auf der seitlichen Außenfläche 6 des Reifens 7 aufliegen. Hierzu können die an den Enden der Ausleger 4 befindlichen Rollen in Richtung eines Doppelpfeils 25 am Querholm 1 längsverschoben werden. Der Stützbügel 23 ist an zwei zusätzlichen Auslegern 26 abgestützt, welche an den Enden des Querholms 1 vorgesehen sind. Der in der Fig. 6 dargestellte Stützbügel ist an den größtmöglichen Raddurchmesser angepaßt. In dem Freiraum zwischen den Schenkeln des Stützbügels 23 können die als Rollen 5 ausgebildeten Drucklager entsprechenden den unterschiedlichen Raddurchmessern - unter Berücksichtigung auch einer über die seitlichen Reifenaußenflächen 6 herausragenden Felgenschüssel 9 - entsprechend eingestellt werden.

Anhand der Figuren 2 bis 5 wird der Demontagevorgang für die beiden in den Figuren 1 und 6 dargestellten Ausführungsbeispiele im einzelnen noch wie folgt erläutert.

Bei Beginn des Demontagevorgangs wird die Demontiervorrichtung, wie in Fig. 2 gezeigt ist, am Rad angesetzt. Die als Rollen 5 ausgebildeten Drucklager liegen auf der seitlichen Außenfläche 6 des Reifens 7 auf. Die hakenförmige Demontierklaue 13 wird unter den Reifenwulst 15 am abzuhebenden Reifenwulstteil 15′ gelegt, so daß an der Eingriffstelle 14 die Demontierklaue 13 zwischen der radial äußeren Fläche des Reifenwulstes 15 und der radial inneren Fläche der Felge 16 angreift.

Um ein einwandfreies Angreifen der Demontierklaue an der Eingriffstelle 14 zu erreichen, kann an der Eingriffstelle 14 der Reifenwulst 15 und/oder die Felge 16 eine entsprechende Ausnehmung (in der Figur nicht näher dargestellt) aufweisen.

Zur Demontage wird der Betätigungshebel 2 des Demontierhebels in Richtung des Pfeiles 26 (Demontierschwenkrichtung) verschwenkt, wobei aufgrund der Vorspannkraft der Druckfeder 18 in einer ersten Demontagephase die hakenförmige Demontierklaue 13 sowie die gesamte Demontiereinrichtung eine Kreisbewegung um die Schwenkachse 22 ausführen. Dabei wird zunächst mit einem vorwiegend bezüglich des Rades axialen (bei den dargestellten Ausführungsbeispielen vertikalen) Kraftvektor die Demontierklaue 13, welche den Eingriffteil des Demontierwerkzeugs 12 bildet, an der Eingriffstelle 14 hinter den Reifenwulst gedrückt. Die auf der seitlichen Außenfläche 6 des Reifens 7 aufliegenden Rollen 5 drücken sich hierbei so weit in die elastische eingebeulte Reifenseitenwand 27, bis die Gegenkraft vom Felgenhorn 8 aufgefangen wird.

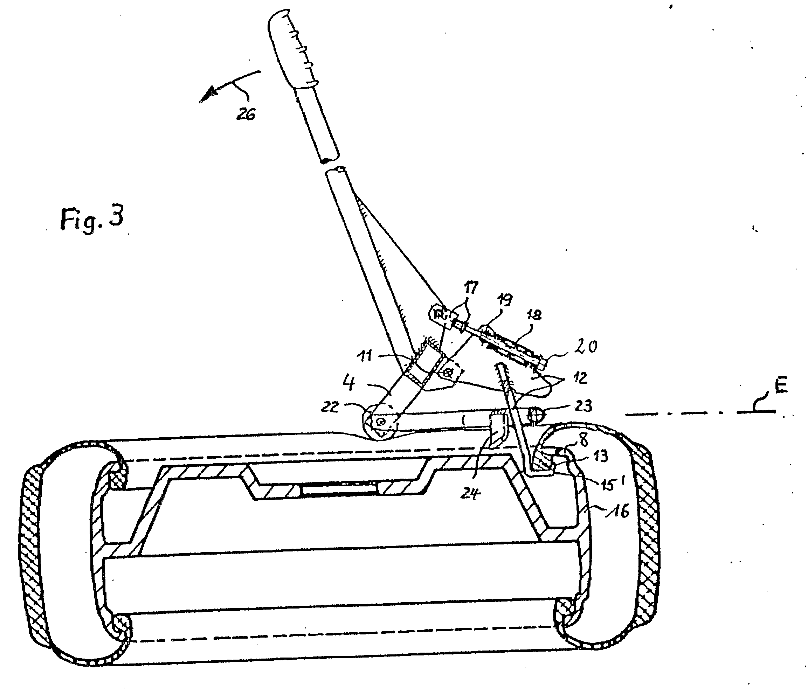

Durch den dabei vorwiegend axialen (bei den dargestellten Ausführungsbeispielen vertikalen) Kraftvektor wird auch ein Drehmoment auf das Demontierwerkzeug 12 im Uhrzeigersinn um die Schwenkachse 11 erzeugt. Wenn diese Drehmoment bei fortgesetzter Bewegung des Betätigungshebels 2 in Demontierschwenkrichtung (Pfeil 26) das entgegengesetzt wirkende Drehmoment aufgrund der Vorspannung der Druckfeder 18 übersteigt, wird die zweite Demontagephase eingeleitet. Hierbei löst sich der Gelenkbolzen 19 des Demontierwerkzeugs 12 von seinem Anschlag am Gabelstück 16, so daß das Demontierwerkzeug 12 um die Schwenkachse 11 relativ gegenüber dem Demontierhebel, welcher von dem Querholm 1, dem Betätigungshebel 2, dem Knotenblech 3 und den Auslegern 4 und 10 gebildet ist, eine Drehbewegung im Uhrzeigersinn entgegen der Federkraft der Druckfeder 18 ausführt. Die Schwenkachse 11 bewegt sich weiterhin gemeinsam mit dem von den Teilen 1 bis 4 und 10 gebildeten Demontierhebel auf einer Kreisbahn um die Schwenkachse 22. Hierdurch ändert sich die Richtung des Kraftvektors, welcher über die Demontierklaue 13 am abzulösenden Reifenwulstteil 15′ angreift. Aufgrund der radial nach innen gerichteten Kraftkomponente wird der Reifenwulstteil 15′ an der Eingriffstelle 14 trotz der entgegengerichteten Federkraft radial nach innen gezogen. Dabei kann durch eine gegebenenfalls noch vorhandene, axial vom Rad weg gerichtete (vertikale) Kraftkomponente, welche vom zwischen dem Eingriffteil 13 und der Schwenkachse 11 wirkenden Kraftvektor kommt, und/oder der Federkraft der Druckfeder 18 vermittelt wird, das Abrutschen der Demontierklaue 13 verhindert werden. Dieser Vorgang ist in der Fig. 3 dargestellt.

Die dabei auftretende, bezüglich der Radachse radial nach innen gerichtete (bei den dargestellten Ausführungsbeispielen horizontale) Kraftkomponente wird durch die Stützfinger 24 am Stützbügel 23 an den entsprechenden Stützstellen am Reifen 7 bzw. Felgenhorn 7 aufgefangen. Wie schon erwähnt, wird das gewünschte radiale Ausbeulen des Reifenwulstteiles 15′ nach innen durch die Stützfinger 24 nicht verhindert.

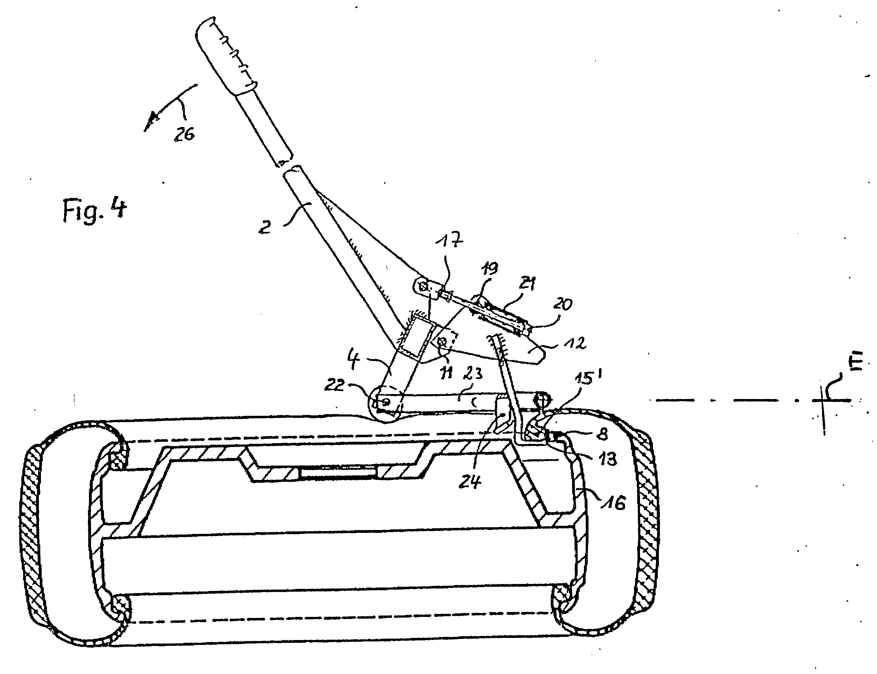

Durch die Schwenkbewegung des Demontierwerkzeugs 12 um die Schwenkachse 11 während der radial nach innen gerichteten Bewegung der Demontierklaue 13 wird die Druckfeder 18 zusammengedrückt, wodurch die der radial nach innen gerichteten Bewegung entgegengesetzt wirkende Kraft der Druckfeder 18 ansteigt. Mit Fortschreiten des Demontiervorgangs. d. h. mit erweitertem Ausbeulen des abzulösenden Reifenwulstteils 15′ an der Eingriffstelle 14 nach innen, läßt die hierfür erforderliche, radial nach innen gerichtete Kraftkomponente nach. Die radial nach innen gerichtete Bewegung der Demontierklaue 13 wird durch Wirksamwerden des Anschlagrohres 21 unterbrochen. Hierbei schlägt der Gelenkbolzen 19 des Demontierwerkzeugs 12 über das Anschlagrohr 21 an den Kopf der Schraube 20 an. Dieser Vorgang ist in Fig. 4 dargestellt. Dabei wird die Schwenkbewegung des Demontierwerkzeugs 12 im Uhrzeigersinn um die Schwenkachse 11 unterbrochen. Für die Durchführung der zweiten Demontagephase ist es wesentlich, daß für das Lösen des Reifenwulstteils 15′ vom Felgenhorn 8 und für die radial nach innen gerichtete· Bewegung der am Reifenwulstteil 15′ angreifenden Demontierklaue 13 während des Verschwenkens des Betätigungshebels 2 in der Demontier schwenkrichtung 26 das Demontierwerkzeug 12 um die Schwenkachse 11 eine allmähliche Schwenkbewegung im Uhrzeigersinn ausführt, so daß im wesentlichen nur eine radial nach innen gerichtete Bewegungskomponente bzw. Kraftkomponente sich auf den abzulösenden Reifenwulstteil 15′ auswirkt. Von Vorteil ist eine das Abrutschen der Demontierklaue 13 vom Reifenwulstteil 15′ verhindernde vertikale Kraftkomponente, die jedoch dann überflüssig sein kann, wenn durch konstruktiv vorgegebene Mittel am Reifenwulst oder an der Felgeninnenfläche, beispielsweise in Form von Ausnehmungen, eine ausreichende Eingriffmöglichkeit für die Demontierklaue vorgesehen ist.

Dadurch, daß die Schwenkbewegung des Demontierwerkzeugs 12 am Demontierhebel um die Schwenkachse 11 durch die vom Anschlagrohr 21 in Zusammenwirkung mit dem Gelenkbolzen 19 und dem Kopf der Schraube 20 vermittelte Anschlagwirkung unterbrochen wird, ist die Beendigung der zweiten Demontagephase und der Übergang in die dritte Demontagephase unabhängig von der Kraft der Feder 18. Es können demgemäß auch Demontagevorgäng mit hohen erforderlichen, radial nach innen gerichteten Kräften ausgeführt werden. Wie die Figuren 3 und 4 zeigen, ist die zweite Demontagephase beendet, wenn der abzulösende Reifenwulstteil 15′ über die äußerste radial innen liegende Fläche des Felgenhorns 18 geführt ist. Es beginnt dann die dritte Demontagephase.

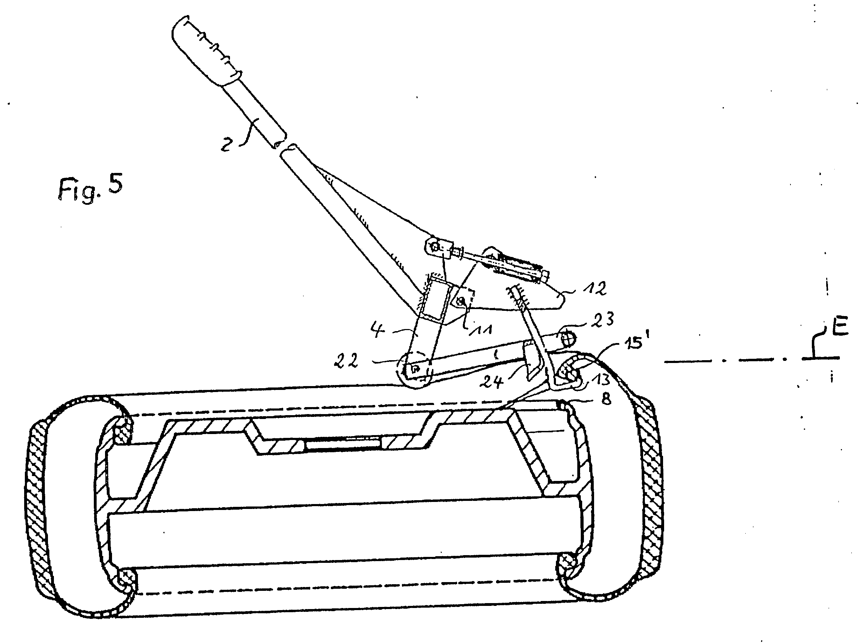

In der dritten Demontagephase wird aufgrund der Blockierung der Schwenkbewegung des Demontierwerkzeugs 12 um die Schwenkachse 11 bei Fortführung der Schwenkbewegung des Betätigungshebels 2 in Demontierschwenkrichtung 26 wiederum nur die Schwenkachse 22 wirksam. Hierbei wird durch die vorwiegend vertikale Bewegung der Demontierklaue 13 der Reifenwulstteil 15′ in axialer Richtung vom Rad weg völlig über das Felgenhorn 8 hinausbewegt. In dieser Stellung des Reifenwulstteiles 15′ läßt auch die erforderliche radiale Kraftkomponente nach, so daß das Demontierwerkzeug 12 um die Schwenkachse 11 eine Schwenkbewegung entgegen dem Uhrzeigersinn zurück in Richtung auf den Demontierhebel zu ausführen kann. Die Demontierklaue 13 ist, wie dies insbesondere aus den Figuren 4 und 5 zu ersehen ist, so bezüglich der Schwenkachse 11 und der Schwenkachse 22 am Demontierwerkzeug 13 angeordnet. daß sie mit dem Reifenwulstteil 15′ in einer sich anschließenden vierten Demontagephase eine Bewegung radial nach außen ausführt. Hierdurch kommt der abzuhebende Reifenwulstteil 15′ ohne zusätzliche Haltekraft völlig frei vom Felgenhorn 8.

Mit dem Anheben des Reifenwulstteiles 15′ über das Felgenhorn 8 wird auch die erforderliche radiale Stützkraft der vom Stützbügel 23 und den Stützfingern 24 gebildeten Stützeinrichtung gegen das umlaufende Felgenhorn 8 reduziert, so daß gegen Ende der dritten Demontagephase auch der Stützbügel 23 gemeinsam mit dem abgelösten Reifenwulstteil 15′ angehoben wird. Die Stötzfinger 24 werden damit ebenfalls vom Felgenhorn 8 frei. Die vierte Demontagephase mit der radial nach außen gerichteten Bewegung des abgelösten Reifenwulstteiles 15′ außerhalb (beim dargestellten Ausführungsbeispiel oberhalb) des Felgenhorns 8 läßt sich noch durch eine rollende Bewegung der kompletten Demontiervorrichtung radial nach außen unterstützen. Dies wird gewährleistet, wenn die Drucklager als Rollen 5, welche um die Schwenkachse 22 drehbar sind, ausgebildet sind. Die vierte Demontagephase wird noch unterstützt durch das Nachlassen der beispielsweise von Hand am Betäigungshebel 2 nachlassenden Kraft in Richtung zur Radebene hin.

Mit Hilfe eines nicht näher dargestellten Demontiereisens, welches zwischen den abgelösten Reifenwulstteil 15′ und das Felgenhorn 8 gelegt wird und um den Felgenhornumfang geführt wird, oder auch durch Herausziehen von Hand, kann der gesamte Reifenwulst 15 vom Felgenhorn 8 gelöst werden.

Der Demontagevorgange, welcher mit der erfindungsgemäßen Demontiervorrichtung durchgeführt wird, läßt sich im wesentlichen in vier Demontagephasen unterteilen. Hierdurch lassen sich Fahrzeugluftreifen, welche sich mit ihren Wülsten 15 auf den Felgen 16 mit radial nach innen gerichteten umlaufenden Felgenhörnern 8 befinden, und bei denen die Reifenseitenwände 27 von außen um die Felgenhörner 8 herumgreifen. von den Felgen 16 demontieren. Die Demontiervorrichtung benötigt hierzu einen einzigen Demontierhebel, dessen Betätigungshebel 2 in einer einzigen Schwenkrichtung, nämlich der Demontierschwenkrichtung 26, während des gesamten Demontagevorgangs bewegt wird. Dabei kommen zwei Schwenkachsen, nämlich die Schwenkachse 22 und die Schwenkachse 11 abwechselnd zur Wirkung. Im ersten Demontagevorgang kommt die Schwenkachse 22 zur Wirkung, wobei die hakenförmige Demontierklaue 13 des Demontierwerkzeugs 12 durch einen vorwiegend axialen Kraftvektor zwischen den Reifenwulst 15 und die radial innere Felgenfläche 16 gedrückt wird. An der Eingriffstelle 14 kann auch eine konstruktiv vorgegebene Ausnehmung am Reifenwulst bzw. an der Felgeninnenfläche vorgesehen sein.

In der Ruhestellung bzw. bei Beginn des Demontagevorgangs nehmen die beiden Schwenkachsen 11 und 22 sowie die Demontierklaue 13 zueinander etwa folgende Winkelstellungen ein. Als Bezugspunkt gilt die Schwenkachse 22 und als Bezugsebene gilt die in den Figuren 2 bis 5 dargestellte Ebene E, welche parallel zur Felgenfläche 9 bzw. Reifenaußenfläche durch die Schwenkachse 22 verläuft. Zu Beginn der ersten Demontagephase bzw. in Ruhestellung nimmt die Schwenkachse 11 gegenüber der Ebene E eine Winkelstellung von etwa 40° ein. Wie insbesondere die Fig. 2 zeigt, befindet sich dabei die Demontierklaue 13 auf der anderen Seite der Ebene E und nimmt zu dieser eine Winkelstellung von etwa 20° ein. Die Demontierklaue 13 ist am Grundkörper des Demontierwerkzeugs 12 vorzugsweise fest, beispielsweise durch Schweißen, angeordnet.

Während der zweiten Demontagephase wird der abzulösende Reifenwulst 15' durch die radial nach innen gerichtete Bewegungskomponente der Demontierklaue 13 nach innen gezogen. Diese zweite Demontagephase ist beendet, wenn die Schwenkachse 11 gegenüber der Bezugsebene E etwa einen Winkel zwischen 55 und 60° einnimmt. Die Winkelstellung der Demontierklaue 13 gegenüber der Bezugsebene E hat sich dabei nur wenig gegenüber den ursprünglich 20° geändert und liegt etwa bei 10°.

In der dritten Demontagephase wird der abzulösende Reifenwulstteil 15' in axialer Richtung am Felgenhorn 8 vom Rad weg geführt, wobei die Schwenkachse 11 um die Schwenkachse 22 bis in eine Winkelstellung mit etwa 70 bis 75° gegenüber der Bezugsebene E geschwenkt wird.

In der abschließenden vierten Demontagephase wird die Schwenkachse 11 gegenüber der Schwenkachse 22 in eine Endlage weiterverschwenkt, welche gegenüber der Bezugsebene E eine Winkellage mit 75 bis 80° einnimmt. Die Demontierklaue 13 und der abgehobene Reifenwulstteil 15' befinden sich dann etwa in Höhe der Bezugsebene E oder geringfügig darüber oder darunter (Figur 5).

**Ansprüche**

1. Demontiervorrichtung für einen an einer Radfelge befestigten Reifen mit
- einem Demontierhebel, der um eine erste Schwenkachse am Rad schwenkbar abgestützt ist,
- einem am Demontierhebel um eine zweite Achse schwenkbar gelagerten Demontierwerkzeug, das einen am Reifenwulst angreifenden Eingriffteil aufweist,

- wobei beim Schwenken des Demontierhebels in der für den Demontiervorgang vorgesehenen Richtung (Demontierschwenkrichtung) das am Reifenwulst angreifende Demontierwerkzeug in einer hierzu entgegengesetzten Richtung am Demontierhebel verschwenkt und dabei ein zu lösender Reifenwulstteil, an welchem das Demontierwerkzeug angreift, zunächst radial nach innen aus dem Bereich des Felgenhorns und dann in axialer Richtung vom Rad weg bewegt ist,
dadurch gekennzeichnet, daß
- die zur Demontierschwenkrichtung (26) des Demontierhebels (1 bis 4, 10) entgegengesetzt gerichtete Schwenkbewegung des Demontierwerkzeugs (12) am Demontierhebel (1 bis 4, 10) durch einen Anschlag (21) begrenzt ist, und
- der Eingriffteil (13) des Demontierwerkzeugs (12) gegenüber der ersten Schwenkachse (22) beim Wirksamwerden des Anschlags (21) so angeordnet ist, daß beim Weiterbewegen des Demontierhebels (1 bis 4, 10) in der Demontierschwenkrichtung (26) der Eingriffteil (13) des Demontierwerkzeugs (12) eine axiale Bewegungskomponente aufweist durch die der zu lösende Reifenwulstteil (15') über das Felgenhorn (8) in axialer Richtung geführt ist.

2. Demontierwerkzeug nach Anspruch 1, dadurch gekennzeichnet, daß bei der radial nach innen gerichteten Bewegung über den Eingriffteil (13) auf den zu lösenden Reifenwulstteil (15') eine axial von der Felge (6) weg gerichtete Kraftkomponente einwirkt.

3. Demontiervorrichtung nach Anspruch 1 oder 2, dadurch gekennzeichnet, daß die zweite Schwenkachse (11), um welche das Demontierwerkzeug (12) am Demontierhebel (1 bis 4, 10) schwenkbar angelenkt ist, während der radial nach innen gerichteten Bewegung eine axial von der Felge (16) weg gerichtete Bewegungskomponente aufweist.

4. Demontiervorrichtung nach einem der Ansprüche 1 bis 3, dadurch gekennzeichnet, daß das Demontierwerkzeug (12) durch eine Federkraft (Feder 18) um die zweite Schwenkachse (11) in Demontierschwenkrichtung (26) vorgespannt ist.

5. Demontiervorrichtung nach Anspruch 4, dadurch gekennzeichnet, daß das Demontierwerkzeug (12) an einem weiteren Anschlag (17) in Ruhestellung anliegt.

6. Demontiervorrichtung nach einem der Ansprüche 1 bis 5, dadurch gekennzeichnet, daß nach der axialen, von der Felge (6) weg gerichteten Bewegung der Eingriffteil (13) gegenüber der zweiten Schwenkachse (11) so angeordnet ist, daß bei einer Schwenkbewegung des Demontierwerkzeugs (12) um die zweite Schwenkachse (11) der Eingriffteil (13) eine bezüglich der Felgenachse radial nach außen gerichtete Bewegungskomponente aufweist.

7. Demontiervorrichtung nach Anspruch 6, dadurch gekennzeichnet, daß die radial nach außen gerichtete Bewegungskomponente des Eingriffteils (13) durch die Richtung der Federkraft (Feder 18) unterstützt ist.

8. Demontiervorrichtung nach einem der Ansprüche 1 bis 7. dadurch gekennzeichnet, daß der Eingriffteil (13) des Demontierwerkzeugs in eine am Reifenwulst (13) und/oder der Felge (16) vorgegebene Ausnehmung eingreift.

9. Demontiervorrichtung nach einem der Ansprüche 1 bis 8. dadurch gekennzeichnet, daß am Demontierhebel (1 bis 4, 10) zum Auffangen einer radial nach innen gerichteten Kraftkomponente eine am Rad (7, 16) abstützbare Stützeinrichtung (23, 24) vorgesehen ist.

10. Demontiervorrichtung nach Anspruch 9, dadurch gekennzeichnet, daß die Stützeinrichtung (23, 24) am Reifen (7) abgestützt ist und bei der axial von der Felge (16) weg gerichteten Bewegung sich mitbewegt.

11. Demontiervorrichtung nach Anspruch 9 oder 10, dadurch gekennzeichnet, daß die Stützeinrichtung (23, 24) bevorzugt um die erste Schwenkachse (22) schwenkbar am Demontierhebel (1 bis 4, 10) angelenkt ist.

12. Demontiervorrichtung nach einem der Ansprüche 1 bis 11, dadurch gekennzeichnet, daß der Demontierhebel (1 bis 4, 10) mittels Rollen (5, 5') am Rad (7, 16) abgestützt ist.

13. Demontiervorrichtung nach einem der Ansprüche 9 bis 12, dadurch gekennzeichnet, daß die Stützeinrichtung (23, 24) sich in einem ein unbehindertes Lösen des abzuhebenden Reifenwulstteils gewährleistenden Abstand vom Eingriffteil (13) am Rad (7, 16) an wenigstens zwei Abstützstellen abstützt.

14. Demontiervorrichtung nach einem der Ansprüche 9 bis 13, dadurch gekennzeichnet, daß die Stützeinrichtung (23, 24) einen am Demontierhebel (1 bis 4, 10) schwenkbar angelenkten Stützbügel (23) aufweist, der sich etwa entlang einem halben Innenumfang des Reifens (7) erstreckt und der zwei, die Abstützstellen bildende Stützfinger (24) aufweist.

15. Demontiervorrichtung nach Anspruch 13 oder 14, dadurch gekennzeichnet, daß die Abstützstellen an der Stützeinrichtung (23, 24) verstellbar angeordnet sind.

16. Demontiervorrichtung nach einem der Ansprüche 1 bis 15, dadurch gekennzeichnet, daß Drucklager (Rollen 5), mit denen er Demontierhebel (1 bis 4, 10) am Rad (7, 16) abgestützt ist, auf entsprechende Reifengröße am Demontierhebel (1 bis 4, 10) einstellbar sind.

Fig. 1

Fig.2

Fig. 3

EP 0 302 220 A2

Fig. 4

EP 0 302 220 A2

Fig. 5

EP 0 302 220 A2

Fig. 6